# EUROPEAN PATENT APPLICATION

(11) **EP 1 962 483 A2**
(43) Date of publication of application: **27.08.2008**
(21) Application number: 08151767.4
(22) Date of filing: 21.02.2008
(51) Int. Cl.: H04M 1/725

(54) **Interactive equipment for receiving, transmitting and displaying data, particularly for satellite navigation systems**

(30) Priority: 23.02.2007 IT GE20070020
(71) Applicant: Viggiano, Adriana Maddalena Adalgisa, 18039 Ventimiglia (IT)
(72) Inventor: Viggiano, Adriana Maddalena Adalgisa, 18039 Ventimiglia (IT)
(74) Representative: Porsia, Attilio

(57) **Abstract**

Interactive equipment for receiving, transmitting and displaying data, particularly for satellite navigation systems, comprising a portable mobile device (3) provided with a display (103) and with a keypad (203) for entering data, and a remote data display device (3) comprising a display (102) and means for entering and browsing the displayed data; this mobile device (3) and this remote device (2) are interconnected for the interchange of data by means of a wireless interface (4), and a program is installed in the mobile device (3) for satellite navigation and for acquiring data from this remote device (2) and transmitting data thereto.

## Description

The present invention relates to interactive equipment for receiving, transmitting and displaying data, particularly for satellite navigation systems.

As is known, existing satellite navigation systems can be installed in special devices for installation in vehicles, or can also be incorporated in cellular telephones, subject to obvious limits, especially as regards display. These satellite navigation systems therefore comprise programs for reading and displaying data about roads, addresses and the like which are loaded into the cellular telephone by means of a dedicated program, or into a satellite navigation system for vehicles, again using a dedicated program. The extensions of cellular telephones in vehicles are limited to voice functions, with the addition of video calls in some cases. This is because a cellular telephone must have a small display size in order to be portable, and must also have low power consumption. On the other hand, a satellite navigation system requires a display which has suitable dimensions and which provides enough detail to communicate the desired data to the user in a rapid and clear manner.

There are known devices for extending the functions of cellular telephones when they are located in vehicles, but these devices are solely intended to make use of the native functions of cellular telephones, such as the voice call functions.

The object of the present invention is therefore to provide interactive equipment for receiving, transmitting and displaying data, particularly for satellite navigation systems for installation in vehicles, which in the first place is not subject to the problems arising from energy saving, which can make use of a single satellite navigation system loaded into a portable mobile device, for subsequent periodic updating, if necessary, with new maps, data and the like, and which has the greatest possible degree of safety and user-friendliness, both within a vehicle and outside it.

This object is achieved by the present invention by means of interactive equipment for receiving, transmitting and displaying data, particularly for satellite navigation systems, characterized in that it comprises a portable mobile device provided with a display and with a keypad for entering data, and a remote data display device comprising a display and means for entering and browsing the displayed data; this mobile device and the said remote device are interconnected for the interchange of data by means of a wireless interface, and a program is installed in the mobile device for satellite navigation and for acquiring data from the said remote device and transmitting data thereto.

Other features and advantages of the present invention will be made clear in the course of the following description, to be considered as a non-limiting example, with reference to a single attached drawing, in which:

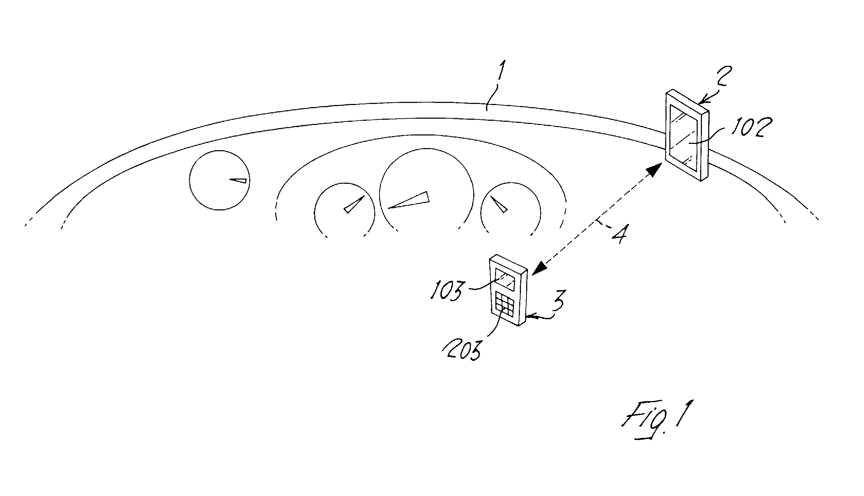

Fig. 1 shows a schematic perspective view of the present interactive equipment for receiving, transmitting and displaying data, particularly for satellite navigation systems, installed for example in a vehicle.

With reference to Fig. 1 of the attached drawing, the number 1 indicates the dashboard of a vehicle on which a remote device 2 is installed for displaying data such as maps, road maps and the like, provided with a corresponding display 102. This remote device 2 can be a hand-held computer, and therefore the display 102 can be of what is known as the "touch screen" type. As an alternative to the above, or in combination therewith, this remote device 2 can be provided with a set of function keys for entering data into the said display 102. The number 3 indicates a mobile data receiving and transmitting device, in which, in this case, there are installed a satellite navigation program, into which the user enters the desired search parameters, and a program for acquiring and transmitting data and for translating into commands the user actions transmitted by the remote device 2 which is provided with a touch screen display or with function keys. This mobile device 3, which can be a cellular telephone owned by the user, who in this case is the driver or a passenger in the vehicle, also comprises a corresponding display 103 and a keypad 203. The mobile device 3 and the remote device 2 are interconnected for data exchange by means of a wireless radio frequency interface 4, for example one of the type known as Bluetooth®, Wibree®, or other standard systems. Essentially, when the mobile device 3 is connected and is located in the vehicle in which the remote device 2 is installed, all the information present on the display 103 of the said mobile device 3 is duplicated on the display 102 of the remote display device 102, while the user's actions on the remote device 2, as mentioned above, are transmitted to the mobile device 3. If necessary, this remote device 2 can be provided with a hands-free function for communicating to the user specified information about the data displayed on the display 102. Thus it will be immediately apparent that the satellite navigation system can advantageously be installed solely in the mobile device 3, and the fact that this device has a small display is irrelevant, since the data are transmitted to the remote display 2. Furthermore, owing to the said presence of the satellite navigation program in the mobile device 3, the user can use the satellite navigation even outside the vehicle, for example in order to find a pedestrian route in a city. This mobile device 2 can if necessary be provided with an integrated GPS (Global Positioning System) receiver. Additionally, or alternatively, the remote device 3 can also be provided with a GPS receiver, which may be integrated in the device or may be external and therefore fixed, for example, to the vehicle dashboard 1.

## Claims

1. Interactive equipment for receiving, transmitting and displaying data, particularly for satellite navigation systems, **characterized in that** it comprises a portable mobile device (3) provided with a display (103) and with means (203) for entering data and a remote data display device (2) comprising a display (102) and means for entering and browsing the displayed data; the said mobile device (3) and the said remote device (2) being interconnected for the interchange of data by means of a wireless interface (4), and a program being installed in the said mobile device (3) for satellite navigation and for acquiring data from the said remote device (2) and transmitting data thereto.

2. Equipment according to Claim 1, **characterized in that** the said mobile device (3) is a cellular telephone capable of transmitting and duplicating any data element processed by the satellite navigation system installed in it to the said remote data display device (2).

3. Equipment according to Claim 1, **characterized in that** it comprises a GPS receiver integrated in the said mobile device (3).

4. Equipment according to Claim 1, **characterized in that** the said remote data display device (2) is installed on the dashboard (1) of a vehicle and comprises a GPS receiver integrated in it or installed externally to it.

5. Equipment according to Claim 1, **characterized in that** the said remote device (2) is a hand-held computer provided with a display (102) of what is known as the "touch screen" type and, if necessary, with a set of function keys.

6. Equipment according to Claim 1, **characterized in that** the said remote device (2) is provided with a hands-free kit to communicate to the user specified information about the data displayed on the display (102).

7. Equipment according to Claim 1, **characterized in that** the said wireless interface (4) for connecting the mobile device (3) and the remote device (2) is of the Bluetooth® or Wibree® type or another standard system.
